# EUROPEAN PATENT APPLICATION

(11) **EP 3 193 266 A1**
(43) Date of publication of application: **19.07.2017**
(21) Application number: 16754385.9
(22) Date of filing: 24.05.2016
(51) Int. Cl.: G06F 17/30

(54) **METHOD AND SYSTEM FOR SORTING HISTORY BROWSING RECORDS**

(30) Priority: 20.11.2015 CN 201510810330
(71) Applicant: LE Holdings (Beijing) Co., Ltd., Beijing 100025 (CN); Lemobile Information Technology (Beijing) Co., Ltd., Beijing 100025 (CN)
(72) Inventor: ZHANG, Ze, Beijing 100025 (CN)
(74) Representative: Maikowski & Ninnemann Patentanwälte Partnerschaft mbB
(86) International application number: PCT/CN2016/083151
(87) International publication number: WO 2017/084282

(57) **Abstract**

The present invention provides a method and a system for ordering browsing histories, wherein the method for ordering browsing histories includes: receiving a triggering instruction of a user for viewing browsing histories; acquiring the geographical location information of a current location; extracting browsing histories corresponding to the geographical location information; and displaying the browsing histories extracted. The present invention also discloses a system for ordering browsing histories. The method and the system for ordering browsing histories provided by the present invention can order the browsing histories according to the geographical location information of the user, and enable the user to quickly find the history to be browsed, thus improving the user experience.

## Description

### CROSS-REFERENCE

This application is based upon Chinese Patent Application 2015108103301, titled "Method and System for Ordering Browsing Histories," filed November 20, 2015, the entire contents of which are incorporated herein by reference.

### TECHNICAL FIELD

The present invention relates to the field of processing browsing histories, and more particularly, to a method and a system for ordering browsing histories.

### BACKGROUND

Presently, ordering of the browsing histories is mainly based on time, and ordered browsing histories are presented according to the order of sequence of browsing time. However, the present time-based ordering manner cannot implement classification and ordination of the browsing histories for some users with relatively stationary living, working and outgoing places according to geographical location information, so that the user experience is poor.

### SUMMARY

The present invention provides a method and a system for ordering browsing histories so as to be capable of ordering the browsing histories according to the geographical location information of the user, and enable the user to quickly find the history to be browsed, thus improving the user experience.

The present invention provides a method for ordering browsing histories, including:
receiving a triggering instruction of a user for viewing browsing histories;
acquiring the geographical location information of a current location;
extracting browsing histories corresponding to the geographical location information; and
displaying the browsing histories extracted.

Preferably, the acquiring the geographical location information of the current location according to the triggering instruction includes:
acquiring the longitude and latitude of the current location;
and/or
acquiring the identification information of a base station;
and/or
acquiring the information of a network access point.

Preferably, after the extracting the browsing histories corresponding to the geographical location information, the method further includes:
acquiring the types of the browsing histories corresponding to the geographical location information;
classifying the browsing histories having the same type and corresponding to the geographical location information.

Preferably, after the browsing and displaying the histories having the same type and corresponding to the geographical location information, the method further includes:
acquiring the browsing time of the browsing histories corresponding to the geographical location information; and
ordering the browsing histories corresponding to the geographical location information according to the order of sequence of the browsing time;
accordingly, the displaying the browsing histories extracted is:
   displaying the browsing histories corresponding to the geographical location information ordered according to the order of sequence of the browsing time.

Preferably, after the displaying the browsing histories corresponding to the geographical location information ordered according to the order of sequence of the browsing time, the method further includes:
determining whether the geographical location information is changed, and if yes, then:
   acquiring the geographical location information of a current location.

The present invention also provides a system for ordering browsing histories, including:
a receiving unit configured to receive a triggering instruction of a user for viewing browsing histories;
a first acquisition unit configured to acquire the geographical location information of a current location;
an extraction unit configured to extract browsing histories corresponding to the geographical location information; and
a display unit configured to display the browsing histories extracted.

Preferably, the first acquisition unit includes:
a GPS module configured to acquire the longitude and latitude of the current location;
and/or
a Modem module configured to acquire the identification information of a base station;
and/or
a Wi-Fi module configured to acquire the information of a network access point.

Preferably, the system further includes:
a second acquisition unit configured to acquire types of the browsing histories corresponding to the geographical location information; and
a classification unit configured to classify the browsing histories having the same type and corresponding to the geographical location information.

Preferably, the system further includes:
a third acquisition unit configured to acquire the browsing time of the browsing histories corresponding to the geographical location information;
an ordering unit configured to order the browsing histories corresponding to the geographical location information according to the order of sequence of the browsing time; and
accordingly, a display unit configured to display the browsing histories corresponding to the geographical location information ordered according to the order of sequence of the browsing time.

Preferably, the system further includes:
a determination unit configured to determine whether the geographical location information is changed; and
when determining that the geographical location information is changed, the first acquisition unit is also configured to acquire the geographical location information of the current location.

From the foregoing solutions, the method and the system for ordering browsing histories provided by the present invention, when the user needs to acquire the browsing histories, receive the triggering instruction of the user for viewing the browsing histories, acquire the geographical location information of the current location of a device according to the triggering instruction received, extract the browsing histories corresponding to the geographical location information according to the geographical location information acquired, and display the browsing histories extracted to facilitate the user to view, thus ordering the browsing histories according to the geographical location information of the user, enabling the user to find the needed browsing histories quickly, and improving the user experience.

### BRIEF DESCRIPTION OF THE DRAWINGS

In order to explain the technical solutions in the embodiments of the invention or in the prior art more clearly, the drawings used in the descriptions of the embodiments or the prior art will be simply introduced hereinafter. It is apparent that the drawings described hereinafter are merely some embodiments of the invention, and those skilled in the art may also obtain other drawings according to these drawings without going through creative work.
Fig. 1 is a flow chart of a first embodiment of a method for ordering browsing histories disclosed by the present invention;
Fig. 2 is a flow chart of a second embodiment of the method for ordering browsing histories disclosed by the present invention;
Fig.3 is a flow chart of a third embodiment of the method for ordering browsing histories disclosed by the present invention;
Fig.4 is a flow chart of a fourth embodiment of the method for ordering browsing histories disclosed by the present invention;
Fig.5 is a structural diagram of a first embodiment of a system for ordering browsing histories disclosed by the present invention;
Fig.6 is a structural diagram of a second embodiment of the system for ordering browsing histories disclosed by the present invention;
Fig.7 is a structural diagram of a third embodiment of the system for ordering browsing histories disclosed by the present invention; and
Fig.8 is a structural diagram of a fourth embodiment of the system for ordering browsing histories disclosed by the present invention.

### DESCRIPTION OF THE EMBODIMENTS

To make the objects, technical solutions and advantages of the embodiments of the present invention more clearly, the technical solutions of the present invention will be clearly and completely described hereinafter with reference to the embodiments and drawings of the present invention. Apparently, the embodiments described are merely partial embodiments of the present invention, rather than all embodiments. Other embodiments derived by those having ordinary skills in the art on the basis of the embodiments of the present invention without going through creative efforts shall all fall within the protection scope of the present invention.

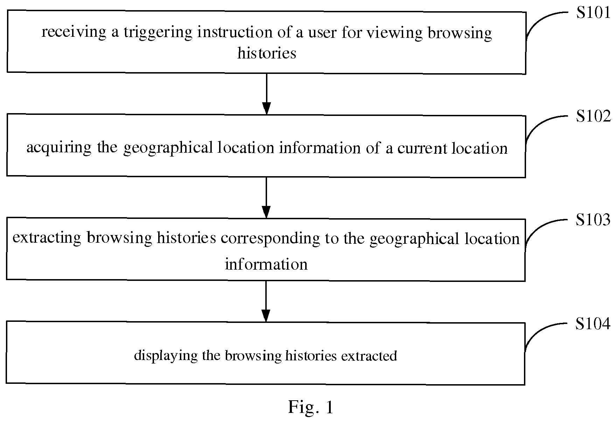

Fig.1 is a flow chart of a first embodiment of a method for ordering browsing histories disclosed by the present invention. As shown in Fig. 1, the method according to the embodiment may include the following steps.

In step 101, a triggering instruction of a user for viewing browsing histories is received.

When the user needs to view the browsing histories of an electronic device, the user triggers the electronic device; after the user triggers the electronic device, the triggering instruction produced by the triggering is received, wherein the triggering instruction is an instruction characterizing that the user needs to view the browsing histories.

In step 102, the geographical location information of a current location is acquired.

After the triggering instruction of the user for viewing the browsing histories is received, the geographical location information of the current location of the user is acquired according to the triggering instruction received, i.e., the current geographical location information of the electronic device is acquired.

In step 103, browsing histories corresponding to the geographical location information are extracted.

After the current geographical location information of the electronic device is acquired, the browsing histories corresponding to the current geographical location information of the electronic device in a browsing history database are extracted. Wherein, the browsing histories stored in the browsing history database include the location information of the user while browsing; therefore, the browsing histories matched with the current geographical location information of the electronic device may be found in the browsing history database through the current geographical location information of the electronic device.

In step 104, the browsing histories extracted are displayed.

When the browsing histories corresponding to the current geographical location information of the electronic device are extracted in the browsing history database, the browsing histories extracted are displayed to facilitate the user to acquire the needed browsing histories intuitively and quickly.

In the embodiment, when the user needs to acquire the browsing histories, by receiving the triggering instruction of the user for viewing the browsing histories, acquiring the geographical location information of the current location of the device according to the triggering instruction received, extracting the browsing histories corresponding to the geographical location information according to the geographical location information acquired, and displaying the browsing histories extracted to facilitate the user to view, ordering the browsing histories according to the geographical location information of the user is implemented, so that the user can find the needed browsing histories quickly, thus improving the user experience.

To be specific, one implementation manner for acquiring the geographical location information of the current location in step 102 in the foregoing embodiment is:
The geographical location information of the electronic device may be determined through acquiring the longitude and latitude of the current location of the electronic device, or the geographical location information of the electronic device may be determined through acquiring the identification information of a base station connected with the electronic device, wherein the base station is a network device conducting information generation and receiving with the electronic device in an operation network, the base station and the electronic device conduct information sending and receiving through radio waves, each base station includes specific unique identification information through which the geographical position of the base station can be determined accurately, so that the current geographical location information of the electronic device can be acquired accurately; or the information of a network access point of the electronic device is acquired, for instance, a wireless router is just one access point, which includes such information like a specific access point name SSID (Service Set Identifier), an access password, an access network card number, and the geographical location information of the electronic device may be determined through the access point information.

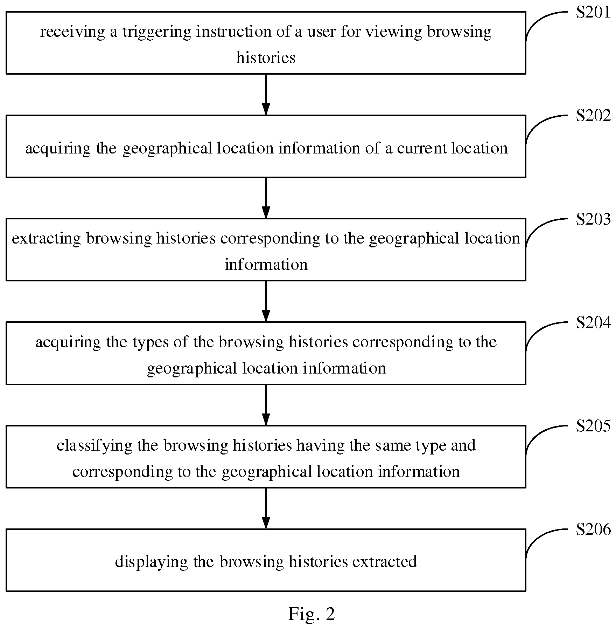

Fig.2 is a flow chart of a second embodiment of the method for ordering browsing histories disclosed by the present invention. As shown in Fig. 2, the method according to the embodiment may include the following steps.

In step 201, a triggering instruction of a user for viewing browsing histories is received.

When the user needs to view the browsing histories of an electronic device, the user triggers the electronic device; after the user triggers the electronic device, the triggering instruction produced by the triggering is received, wherein the triggering instruction is an instruction characterizing that the user needs to view the browsing histories.

In step 202, the geographical location information of a current location is acquired.

After the triggering instruction of the user for viewing the browsing histories is received, the geographical location information of the current location of the user is acquired according to the triggering instruction received, i.e., the current geographical location information of the electronic device is acquired.

In step 203, browsing histories corresponding to the geographical location information are extracted.

After the current geographical location information of the electronic device is acquired, the browsing histories corresponding to the current geographical location information of the electronic device in a browsing history database are extracted. Wherein, the browsing histories stored in the browsing history database include the location information of the user while browsing; therefore, the browsing histories matched with the current geographical location information of the electronic device may be found in the browsing history database through the current geographical location information of the electronic device.

In step 204, the types of the browsing histories corresponding to the geographical location information are acquired.

Webpages browsed in each time have a unique webpage type thereof, for example: shopping website, information query website, etc. When the browsing histories corresponding to the current geographical location information of the electronic device are extracted, the types of the browsing histories are acquired at the same time, which facilitates classifying the browsing histories subsequently according to the browsing histories acquired.

In step 205, the browsing histories having the same type and corresponding to the geographical location information are classified.

After the types of the browsing histories are acquired, the browsing histories having the same type are placed together, for example, all the shopping websites in the browsing histories acquired are placed together. Placing the browsing histories having the same type together is more convenient for the user to find.

In step 206, the browsing histories extracted are displayed.

After the browsing histories having the same type are placed together, the classified browsing histories are displayed, thus facilitating the user to acquire the needed browsing histories intuitively and quickly.

On the basis of the first embodiment above, classifying treatment on the browsing histories extracted is added in the embodiment. By placing the browsing histories having the same type together, it is more convenient for the user to find out the needed browsing histories.

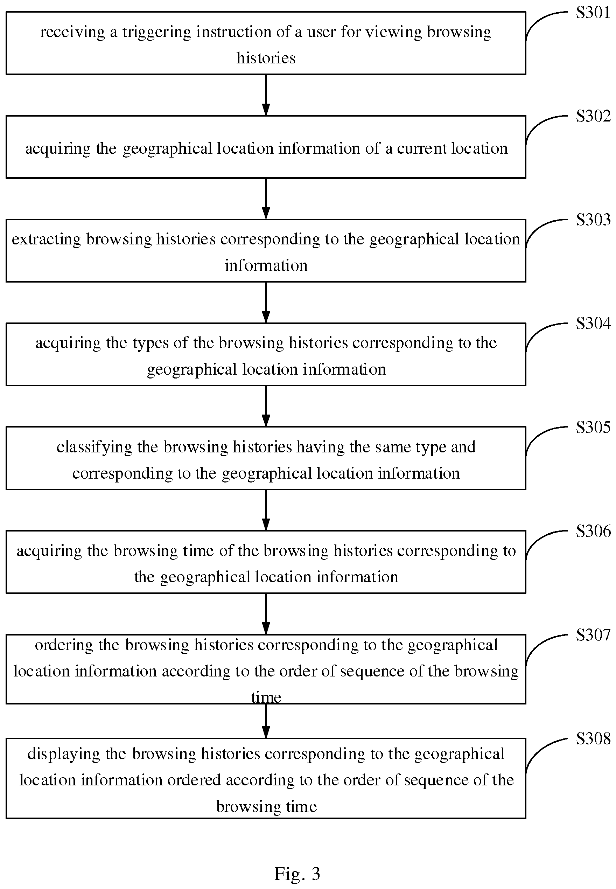

Fig.3 is a flow chart of a third embodiment of the method for ordering browsing histories disclosed by the present invention. As shown in Fig. 3, the difference of the embodiment from that of the embodiment as shown in Fig. 2 is that the browsing histories extracted on the basis of the geographical location information are ordered according to the order of sequence of historical browsing time. The method according to the embodiment may include the following steps.

In step 301, a triggering instruction of a user for viewing browsing histories is received.

When the user needs to view the browsing histories of an electronic device, the user triggers the electronic device; after the user triggers the electronic device, the triggering instruction produced by the triggering is received, wherein the triggering instruction is an instruction characterizing that the user needs to view the browsing histories.

In step 302, the geographical location information of a current location is acquired.

After the triggering instruction of the user for viewing the browsing histories is received, the geographical location information of the current location of the user is acquired according to the triggering instruction received, i.e., the current geographical location information of the electronic device is acquired.

In step 303, browsing histories corresponding to the geographical location information are extracted.

After the current geographical location information of the electronic device is acquired, the browsing histories corresponding to the current geographical location information of the electronic device in a browsing history database are extracted. Wherein, the browsing histories stored in the browsing history database include the location information of the user while browsing; therefore, the browsing histories matched with the current geographical location information of the electronic device may be found in the browsing history database through the current geographical location information of the electronic device.

In step 304, the types of the browsing histories corresponding to the geographical location information are acquired.

Webpages browsed in each time have a unique webpage type thereof, for example: shopping website, information query website, etc. When the browsing histories corresponding to the current geographical location information of the electronic device are extracted, the types of the browsing histories are acquired at the same time, which facilitates classifying the browsing histories subsequently according to the browsing histories acquired.

In step 305, the browsing histories having the same type and corresponding to the geographical location information are classified.

After the types of the browsing histories are acquired, the browsing histories having the same type are placed together, for example, all the shopping websites in the browsing histories acquired are placed together. Placing the browsing histories having the same type together is more convenient for the user to look up.

In step 306, the browsing time of the browsing histories corresponding to the geographical location information is acquired.

When the user is browsing a webpage through the electronic device, the browsing time of the current webpage will be recorded and saved during the browsing process. When the browsing histories corresponding to the current geographical location information of the electronic device are extracted, the browsing time information of the browsing histories is acquired at the same time, which facilitates ordering the browsing histories subsequently according to the browsing time of the browsing histories acquired.

In step 307, the browsing histories corresponding to the geographical location information are ordered according to the order of sequence of the browsing time.

After the browsing histories corresponding to the geographical location information and the browsing time of the browsing histories are acquired, the browsing histories are ordered according to the order of sequence of the browsing time, i.e., the ordering of the browsing histories is that the browsing history proximate to the current moment is ordered in the front and other browsing histories are ordered and so on.

In step 308, the browsing histories corresponding to the geographical location information ordered according to the order of sequence of the browsing time are displayed.

After the browsing histories are arranged according to the order of sequence of time, the arranged browsing histories are displayed, so that the user can acquire the browsing history proximate to the current moment firstly.

On the basis of the second embodiment above, ordering the browsing histories extracted on the basis of the geographical location information according to the order of sequence of the historical browsing time is added in the embodiment. By arranging the browsing histories according to the order of sequence of time, the user can acquire the browsing history proximate to the current moment firstly, so that it is more convenient for the user to find out the needed browsing histories quickly.

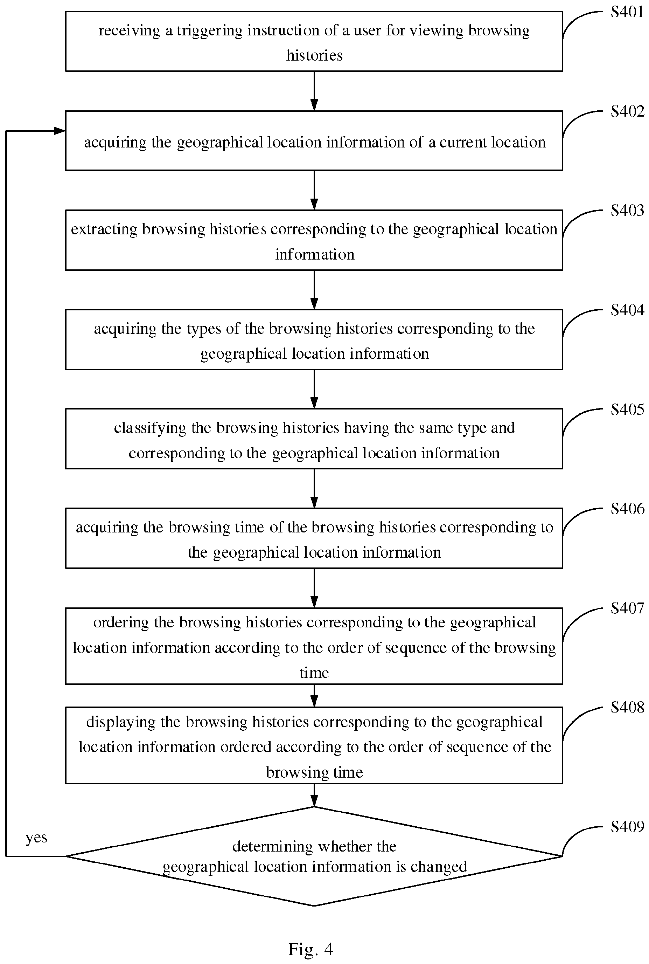

Fig.4 is a flow chart of a fourth embodiment of the method for ordering browsing histories disclosed by the present invention. As shown in Fig. 4, the difference of the embodiment from that of the embodiment as shown in Fig. 3 is that determining whether the geographical location information of the electronic device is changed is also added. The method according to the embodiment may include the following steps.

In step 401, a triggering instruction of a user for viewing browsing histories is received.

When the user needs to view the browsing histories of an electronic device, the user triggers the electronic device; after the user triggers the electronic device, the triggering instruction produced by the triggering is received, wherein the triggering instruction is an instruction characterizing that the user needs to view the browsing histories.

In step 402, the geographical location information of a current location is acquired.

After the triggering instruction of the user for viewing the browsing histories is received, the geographical location information of the current location of the user is acquired according to the triggering instruction received, i.e., the current geographical location information of the electronic device is acquired.

In step 403, browsing histories corresponding to the geographical location information are extracted.

After the current geographical location information of the electronic device is acquired, the browsing histories corresponding to the current geographical location information of the electronic device in a browsing history database are extracted. Wherein, the browsing histories stored in the browsing history database include the location information of the user while browsing; therefore, the browsing histories matched with the current geographical location information of the electronic device may be found in the browsing history database through the current geographical location information of the electronic device.

In step 404, the types of the browsing histories corresponding to the geographical location information are acquired.

Webpages browsed in each time have a unique webpage type thereof, for example: shopping website, information query website, etc. When the browsing histories corresponding to the current geographical location information of the electronic device are extracted, the types of the browsing histories are acquired at the same time, which facilitates classifying the browsing histories subsequently according to the browsing histories acquired.

In step 405, the browsing histories having the same type and corresponding to the geographical location information are classified.

After the types of the browsing histories are acquired, the browsing histories having the same type are placed together, for example, all the shopping websites in the browsing histories acquired are placed together. Placing the browsing histories having the same type together is more convenient for the user to look up.

In step 406, the browsing time of the browsing histories corresponding to the geographical location information is acquired.

When the user is browsing a webpage through the electronic device, the browsing time of the current webpage will be recorded and saved during the browsing process. When the browsing histories corresponding to the current geographical location information of the electronic device are extracted, the browsing time information of the browsing histories is acquired at the same time, which facilitates ordering the browsing histories subsequently according to the browsing time of the browsing histories acquired.

In step 407, the browsing histories corresponding to the geographical location information are ordered according to the order of sequence of the browsing time.

After the browsing histories corresponding to the geographical location information and the browsing time of the browsing histories are acquired, the browsing histories are ordered according to the order of sequence of the browsing time, i.e., the ordering of the browsing histories is that the browsing history proximate to the current moment is ordered in the front and other browsing histories are ordered and so on.

In step 408, the browsing histories corresponding to the geographical location information ordered according to the order of sequence of the browsing time are displayed.

After the browsing histories are arranged according to the order of sequence of time, the arranged browsing histories are displayed, so that the user can acquire the browsing history proximate to the current moment firstly.

In step 409, the geographical location information is determined whether to be changed; if yes, then return to step 402.

During the process of ordering on the basis of the current geographical location information of the electronic device and the browsing time of the browsing histories, the current geographical location information of the electronic device is monitored at the same time; and the geographical location information of the electronic device is determined whether to be changed through the monitoring; for example, the electronic device is determined whether to be changed from home previously to a working area; when determining that the geographical location information of the electronic device is changed, return to the foregoing step 402 to acquire the current geographical location information of the electronic device again and perform subsequent corresponding steps.

On the basis of the third embodiment above, determining whether the geographical location information of the electronic device is changed is added in the embodiment. When determining that the geographical location information of the electronic device is changed, the current geographical location information of the electronic device can be acquired again, and corresponding browsing histories ordering may be performed again on the basis of the new geographical location information acquired.

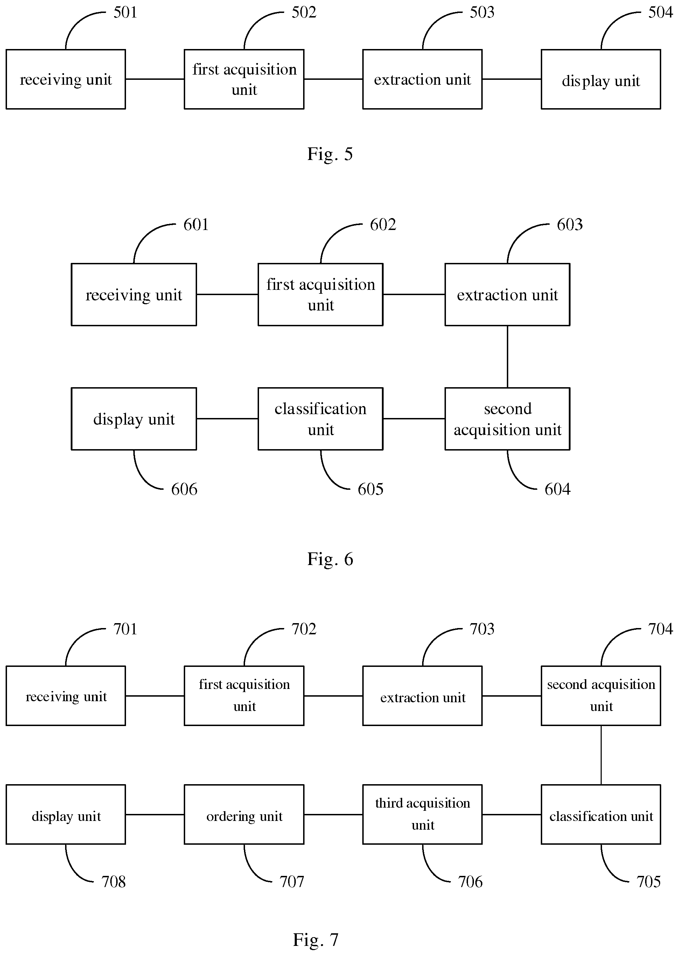

Fig.5 is a structural diagram of a first embodiment of a system for ordering browsing histories disclosed by the present invention. As shown in Fig. 5, the system according to the embodiment may include: a receiving unit 501, a first acquisition unit 502, an extraction unit 503 and a display unit 504, wherein:
the receiving unit 501 is configured to receive a triggering instruction of a user for viewing browsing histories;
the first acquisition unit 502 is configured to acquire the geographical location information of a current location;
the extraction unit 503 is configured to extract browsing histories corresponding to the geographical location information; and
the display unit 504 is configured to display the browsing histories extracted.

The system according to the embodiment may be configured to execute the technical solutions of the embodiment of the method as shown in Fig. 1, wherein the implementation principles and technical effects thereof are similar, and will not be elaborated herein.

Fig.6 is a structural diagram of a second embodiment of the system for ordering browsing histories disclosed by the present invention. As shown in Fig. 6, the system according to the embodiment may include: a receiving unit 601, a first acquisition unit 602, an extraction unit 603, a second acquisition unit 604, a classification unit 605 and a display unit 606, wherein:
the receiving unit 601 is configured to receive a triggering instruction of a user for viewing browsing histories;
the first acquisition unit 602 is configured to acquire the geographical location information of a current location;
the extraction unit 603 is configured to extract browsing histories corresponding to the geographical location information;
the second acquisition unit 604 is configured to acquire types of the browsing histories corresponding to the geographical location information;
the classification unit 605 is configured to classify the browsing histories having the same type and corresponding to the geographical location information; and
the display unit 606 is configured to display the browsing histories extracted.

The system according to the embodiment may be configured to execute the technical solutions of the embodiment of the method as shown in Fig. 2, wherein the implementation principles and technical effects thereof are similar, and will not be elaborated herein.

Fig.7 is a structural diagram of a third embodiment of the system for ordering browsing histories disclosed by the present invention. As shown in Fig. 7, the system according to the embodiment may include: a receiving unit 701, a first acquisition unit 702, an extraction unit 703, a second acquisition unit 704, a classification unit 705, a third acquisition unit 706, an ordering unit 707 and a display unit 708, wherein:
the receiving unit 701 is configured to receive a triggering instruction of a user for viewing browsing histories;
the first acquisition unit 702 is configured to acquire the geographical location information of a current location;
the extraction unit 703 is configured to extract browsing histories corresponding to the geographical location information;
the second acquisition unit 704 is configured to acquire types of the browsing histories corresponding to the geographical location information;
the classification unit 705 is configured to classify the browsing histories having the same type and corresponding to the geographical location information;
the third acquisition unit 706 is configured to acquire the browsing time of the browsing histories corresponding to the geographical location information;
the ordering unit 707 is configured to order the browsing histories corresponding to the geographical location information according to the order of sequence of the browsing time; and
the display unit 708 is configured to display the browsing histories corresponding to the geographical location information ordered according to the order of sequence of the browsing time.

The system according to the embodiment may be configured to execute the technical solutions of the embodiment of the method as shown in Fig. 3, wherein the implementation principles and technical effects thereof are similar, and will not be elaborated herein.

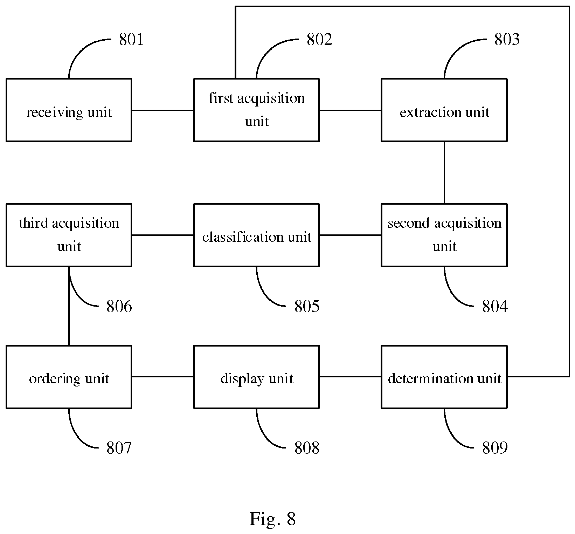

Fig.8 is a structural diagram of a third embodiment of the system for ordering browsing histories disclosed by the present invention. As shown in Fig. 8, the system according to the embodiment may include: a receiving unit 801, a first acquisition unit 802, an extraction unit 803, a second acquisition unit 804, a classification unit 805, a third acquisition unit 806, an ordering unit 807, a display unit 808, and a determination unit 809, wherein:
the receiving unit 801 is configured to receive a triggering instruction of a user for viewing browsing histories;
the first acquisition unit 802 is configured to acquire the geographical location information of a current location;
the extraction unit 803 is configured to extract browsing histories corresponding to the geographical location information; and
the second acquisition unit 804 is configured to acquire types of the browsing histories corresponding to the geographical location information;
the classification unit 805 is configured to classify the browsing histories having the same type and corresponding to the geographical location information;
the third acquisition unit 806 is configured to acquire the browsing time of the browsing histories corresponding to the geographical location information;
the ordering unit 807 is configured to order the browsing histories corresponding to the geographical location information according to the order of sequence of the browsing time;
the display unit 808 is configured to display the browsing histories corresponding to the geographical location information ordered according to the order of sequence of the browsing time; and
the determination unit 809 is configured to determine whether the geographical location information is changed.

The system according to the embodiment may be configured to execute the technical solutions of the embodiment of the method as shown in Fig. 4, wherein the implementation principles and technical effects thereof are similar, and will not be elaborated herein.

It may be understood by those having ordinary skills in the art that the all or a part of steps of implementing the various embodiments of the method above may be finished through relevant hardware instructed by a program. The program may be stored in a mobile device or a computer readable storage medium, and the program while performing includes the steps of the foregoing embodiments of the method. While the forementioned storage medium includes: various mediums that can store program codes such as ROM, RAM, magnetic disk or optical disk.

The device embodiments described above are only exemplary, wherein the units illustrated as separation parts may either be or not physically separated, and the parts displayed by units may either be or not physical units, i.e., the parts may either be located in the same plate, or be distributed on at least two network units. A part or all of the modules may be selected according to an actual requirement to achieve the objectives of the solutions in the embodiments. Those having ordinary skills in the art may understand and implement without going through creative work.

It should be finally noted that all the embodiments above are only configured to explain the technical solutions of the present invention, but are not intended to limit the protection scope of the present invention. Although the present invention has been illustrated in detail according to the foregoing embodiments, those having ordinary skills in the art should understand that modifications can still be made to the technical solutions recited in various embodiments described above, or equivalent substitutions can still be made to a part or whole of technical features thereof, and these modifications or substitutions will not make the essence of the corresponding technical solutions depart from the spirit and scope of the claims.

### INDUDSTRIAL APPLICABILITY

The method and the system for ordering browsing histories provided by the present invention, when the user wants to acquire the browsing histories, receive the triggering instruction of the user for viewing the browsing histories, acquire the geographical location information of the current location of a device according to the triggering instruction received, extract the browsing histories corresponding to the geographical location information according to the geographical location information acquired, and display the browsing histories extracted to facilitate the user to view, thus ordering the browsing histories according to the geographical location information of the user, enabling the user to find the needed browsing histories quickly, and improving the user experience.

## Claims

1. A method for ordering browsing histories, **characterized in that**, comprising:
receiving a triggering instruction of a user for viewing browsing histories;
acquiring the geographical location information of a current location;
extracting browsing histories corresponding to the geographical location information; and
displaying the browsing histories extracted.

2. The method according to claim 1, **characterized in that**, the acquiring the geographical location information of the current location according to the triggering instruction comprises:
acquiring the longitude and latitude of the current location;
and/or
acquiring the identification information of a base station;
and/or
acquiring the information of a network access point.

3. The method according to claim 1 or 2, **characterized in that**, after the extracting the browsing histories corresponding to the geographical location information, the method further comprises:
acquiring the types of the browsing histories corresponding to the geographical location information; and
classifying the browsing histories having the same type and corresponding to the geographical location information.

4. The method according to claim 3, **characterized in that**, after the classifying and displaying the browsing histories having the same type and corresponding to the browsing histories, the method further comprises:
acquiring the browsing time of the browsing histories corresponding to the geographical location information; and
ordering the browsing histories corresponding to the geographical location information according to the order of sequence of the browsing time;
accordingly, the displaying the browsing histories extracted is:
displaying the browsing histories corresponding to the geographical location information ordered according to the order of sequence of the browsing time.

5. The method according to claim 4, **characterized in that**, after the displaying the browsing histories corresponding to the geographical location information ordered according to the order of sequence of the browsing time, the method further comprises:
determining whether the geographical location information is changed, and if yes, then:
acquiring the geographical location information of a current location.

6. A system for ordering browsing histories, **characterized in that**, comprising:
a receiving unit configured to receive a triggering instruction of a user for viewing browsing histories;
a first acquisition configured to acquire the geographical location information of a current location;
an extraction unit configured to extract browsing histories corresponding to the geographical location information; and
a display unit configured to display the browsing histories extracted.

7. The system according to claim 6, **characterized in that**, the first acquisition unit comprises:
a GPS module configured to acquire the longitude and latitude of the current location;
and/or
a Modem module configured to acquire the identification information of a base station;
and/or
a Wi-Fi module configured to acquire the information of a network access point.

8. The system according to claim 6 or 7, **characterized in that**, further comprising:
a second acquisition unit configured to acquire types of the browsing histories corresponding to the geographical location information; and
a classification unit configured to classify the browsing histories having the same type and corresponding to the geographical location information.

9. The system according to claim 8, **characterized in that**, further comprising:
a third acquisition unit configured to acquire the browsing time of the browsing histories corresponding to the geographical location information;
an ordering unit configured to order the browsing histories corresponding to the geographical location information according to the order of sequence of the browsing time; and
accordingly, a display unit configured to display the browsing histories corresponding to the geographical location information ordered according to the order of sequence of the browsing time.

10. The system according to claim 9, **characterized in that**, further comprising:
a determination unit configured to determine whether the geographical location information is changed; and
when determining that the geographical location information is changed, the first acquisition unit is also configured to acquire the geographical location information of the current location.
